# EUROPÄISCHE PATENTSCHRIFT

(11) **EP 3 649 371 B1**
(45) Veröffentlichungstag und Bekanntmachung des Hinweises auf die Patenterteilung: **13.04.2022**
(21) Anmeldenummer: 18756177.4
(22) Anmeldetag: 10.08.2018
(51) Int. Cl.: F16G 11/02, E04G 21/00, F16G 11/14

(54) **SYSTEM AUS STATISCH BELASTBAREN KOMPONENTEN IN EINEM BAUWERK**
SYSTEM CONSISTING OF STATICALLY LOADABLE COMPONENTS IN A STRUCTURE
SYSTÈME D'ÉLÉMENTS STATIQUEMENT RÉSISTANTS DANS UN SEUL BÂTIMENT

(30) Priorität: 16.08.2017 DE 202017104917 U
(43) Veröffentlichungstag der Anmeldung: 13.05.2020
(73) Patentinhaber: Pfeifer Holding GmbH & Co. KG, 87700 Memmingen (DE)
(72) Erfinder: FITZ, Christian, 88339 Bad Waldsee (DE)
(74) Vertreter: Hoffmann Eitle
(86) Internationale Anmeldenummer: PCT/EP2018/071757
(87) Internationale Veröffentlichungsnummer: WO 2019/034555

(56) Entgegenhaltungen:
- EP-A1- 0 945 648
- CH-A2- 700 568
- DE-A1- 3 220 984
- DE-A1- 10 216 918
- DE-U1- 9 300 199
- KR-B1- 101 128 422

## Beschreibung

### TECHNISCHES GEBIET

Die vorliegende Erfindung betrifft ein System aus statisch belastbaren Komponenten für Bauwerke umfassend zumindest zwei verschiedene, austauschbare Zugelemente mit jeweils zumindest einem Endbereich, die in ihrem Endbereich ein Außengewinde aufweisen. Das System umfasst ferner zumindest eine Verbindungskomponente mit einem Innengewinde, das dazu ausgebildet ist, mit dem Außengewinde eines der Zugelemente als Zugglied zusammenzuwirken.

### DEFINITIONEN

Im Zusammenhang mit der vorliegenden Anmeldung sind folgende Definitionen zugrunde zu legen:
Zugglied: Ein Zugglied ist ein Zugelement, das mit mindestens einer Verbindungskomponente ausgestattet ist.
Zugelement: Ein Zugelement kann ein Zugstab oder ein Seilzugglied sein.
Zugstab: Ein Zugstab kann aus einem beliebigen Vollquerschnitt mit aufgerolltem oder geschnittenem Außengewinde an mindestens einem Endbereich bestehen.
Seilzugglied: Ein Seilzugglied kann aus einem Seil und einem aufgepressten oder aufgerollten Seilendbeschlag, insbesondere einem Gewindefitting, bestehen.
Verbindungskomponente: Eine Verbindungskomponente kann ein Anschlusskopf oder eine Muffe sein.
Anschlusskopf: Ein Anschlusskopf kann ein Gabelkopf oder ein Ösenkopf sein. Er ist dazu geeignet, Zugelemente miteinander oder mit einer umgebenden Struktur zu verbinden. Zusammen mit einem Zugelement bildet er ein Zugglied.
Gabelkopf: Ein Gabelkopf kann ein Gussteil, Schmiedeteil oder mechanisch gefertigtes Teil mit Innengewinde und zwei Laschen mit Augen sein.
Ösenkopf: Ein Ösenkopf kann ein Gussteil, Schmiedeteil oder mechanisch gefertigtes Teil mit Innengewinde und einer Lasche mit Auge sein.
Gewindefitting: Ein Gewindefitting kann aus einer Verpresshülse und einem Außengewindebereich bestehen. Ein Gewindefitting ist dazu geeignet, auf ein Seil aufgerollt oder aufgepresst zu werden.
Seil: Ein Seil kann aus Runddrähten und/oder Profildrähten bestehen, die mindestens einfach verseilt sind.
Muffe: Eine Muffe kann ein Verbindungselement mit zwei gleich oder ungleich gerichteten Innengewinden sein. Sie ist dazu geeignet, Zugelemente miteinander oder mit einer umgebenden Struktur zu verbinden.

### STAND DER TECHNIK

DE 102 16 918 A1 offenbart einen Gabelkopf mit einem Zuganschluss und zwei Gabelkopfwangen auf der dem Zuganschluss abgewandten Seite. Der Zuganschluss ist beispielsweise als Innengewinde zum Einschrauben eines Außengewindes einer Zugstange oder eines anderen Zugelements offenbart.

In bekannten Systemen aus statisch belastbaren Komponenten für Bauwerke werden häufig Zugstäbe und Seilzugglieder eingesetzt. Zugstäbe bestehen normalerweise aus Vollquerschnitten, die an ihren beiden Enden ein Gewinde aufweisen, über das diverse Verbindungskomponenten mit Innengewinde mit dem Stab verbunden werden können. Beispiele für solche Verbindungskomponenten sind Gabelköpfe, Ösenköpfe oder Muffen, die beispielsweise zur Verbindung des Stabs mit einem anderen Stab oder mit dem Bauwerk eingesetzt werden.

Um eine Verbindungskomponente mit einem Seilzugglied verbinden zu können, werden üblicherweise Endfittinge, insbesondere Gewindefittinge, aufgepresst. Gewindefittinge bestehen in der Regel unter anderem aus einer Verpresshülse und einem Außengewindebereich. Der Außengewindebereich des Gewindefittings kann wie das Gewinde eines Zugstabs mit einer Verbindungskomponente mit Innengewinde verbunden werden.

Wegen unterschiedlicher Sicherheitskonzepte und Sicherheitsfaktoren für Seilzugglieder und Zugstäbe ist es bisher üblich, bei Seilzuggliedern die Verpressung des Seilendbeschlags, insbesondere des Gewindefittings, nachzuweisen. Für die zum Nachweis erforderlichen Versuche ist es nötig, dass das Gewinde des Gewindefittings mehr Last aufnehmen kann als die rechnerische Bruchkraft des Seils. Andernfalls kann die maximale durch die Verpressung des Gewindefittings aufnehmbare Last nicht durch Zugversuche bestimmt werden, da vorher das Gewinde versagen würde. Als Konsequenz aus diesem Vorgehen musste es das Ziel jeder Bemessung eines Seilzuggliedes sein, ein Seilzugglied zu konzipieren, das nicht im Bereich des Endbeschlags, sondern im Bereich des Seiles versagt.

Auf Grund der unterschiedlichen Prüfverfahren für die Belastbarkeit von Zugstäben und Seilzuggliedern unterscheiden sich die Grenzzugkräfte und die Bruchkräfte von Zugstäben und Seilzuggliedern mit derselben Gewindegröße der Anschlüsse erheblich, was einen flexiblen Wechsel zwischen Seilzuggliedern und Zugstäben zumindest massiv einschränkt.

### DARSTELLUNG DER ERFINDUNG

Vor diesem Hintergrund besteht eine Aufgabe der vorliegenden Erfindung darin, ein System bereitzustellen, bei dem leicht zwischen verschiedenen Zugelementen, insbesondere zwischen Zugstäben einerseits und Seilzuggliedern andererseits, hin und her gewechselt werden kann.

Die Aufgabe der vorliegenden Erfindung wird gelöst durch ein System nach Anspruch 1, sowie ein Zugelement nach Anspruch 14 und eine Verbindungskomponente nach Anspruch 15.

Das erfindungsgemäße System aus statisch belastbaren Komponenten in einem Bauwerk umfasst zumindest zwei verschiedene, austauschbare Zugelemente mit jeweils zumindest einem Endbereich, die in ihrem Endbereich ein Außengewinde aufweisen. Ferner umfasst das System zumindest eine Verbindungskomponente mit einem Innengewinde, das dazu ausgebildet ist, mit dem Außengewinde des Zugelements zusammenzuwirken. Erfindungsgemäß weisen die Außengewinde der zumindest zwei verschiedenen, austauschbaren Zugelemente dieselbe Gewindetragfähigkeit auf und bestimmen eine jeweilige Grenzzugkraft der zumindest zwei verschiedenen, austauschbaren Zugelemente.

Versuchsreihen haben gezeigt, dass die Bruchkraft des Seils nicht maßgebend für die Tragfähigkeit eines Seilzuggliedes sein muss. Wie beim Zugstab kann auch bei einem Seilzugglied die Gewindetragfähigkeit als maßgebend angenommen werden. In diesem Fall kann der Seildurchmesser und ggf. die Verpressung des Gewindefittings so auf die Gewindetragfähigkeit abgestimmt werden, dass das Gewinde die geringste Belastbarkeit aufweist und somit die verschiedenen Zugelemente, insbesondere Seilzugglied und Zugstab, unter Beachtung der jeweils gültigen Sicherheitskonzepte dieselbe, durch das Gewinde bestimmte Grenzzugkraft aufweisen.

So können verschiedene Zugelemente mit derselben Verbindungskomponente versehen werden und die gleiche Grenzzugkraft bereitstellen. Dies ermöglicht ein Austauschen verschiedener Zugelemente ohne den bisher erforderlichen erheblichen (Um-)Konstruktionsaufwand, beispielsweise aufgrund unterschiedlicher Abmessungen der verschiedenen Verbindungskomponenten oder der unterschiedlichen Bruch- oder Grenzzugkraft verschiedener Zugelemente.

Mit anderen Worten ist erfindungsgemäß vorgesehen, das schwächste Glied, d.h. beim Zugstab das Gewinde, für alle Zugelemente des Systems zu vereinheitlichen. So können die verschiedenen Zugelemente ohne weiteres ausgetauscht und modular eingesetzt und das System wesentlich effizienter verwendet werden.

Eine bestimmte Verbindungskomponente kann mit den verschiedenen Zugelementen verwendet werden, was dem System zu einer großen Flexibilität verhilft, weil beliebige Kombinationen möglich sind, die zuvor entweder nicht möglich waren oder zumindest jeweils auf einen speziellen Einsatzzweck hin geprüft oder getestet werden mussten.

In einer bevorzugten Ausführungsform weisen die Zugelemente einen Zugstab oder ein Seil auf. Auch andere Elemente wie Druckstäbe oder ähnliche Komponenten sind grundsätzlich als Zugglieder denkbar, wobei die Erfindung ihren Vorteil besonders in Systemen ausspielt, in denen wahlweise ein Zugstab oder ein Seil grundsätzlich Anwendung finden können.

Insbesondere kann es sich bei dem Zugelement um einen Zugstab oder einen Druckstab mit einem Gewinde handeln, wie er in der parallelen Gebrauchsmusteranmeldung der vorliegenden Anmelderin beschrieben ist, die am gleichen Tag wie die vorliegende Anmeldung unter dem Titel "Zugstab oder Druckstab mit korrosionsbeständigen Gewindeflanken" eingereicht wurde. Der diesbezügliche Inhalt der parallelen Gebrauchsmusteranmeldung wird hiermit ausdrücklich auch zum Gegenstand der vorliegenden Anmeldung gemacht.

Bevorzugt ist als Verbindungskomponente ein Gabelkopf.

Es gibt aber u.a. auch Ösenköpfe, insbesondere zum Verbinden der Zugglieder untereinander und mit der umgebenden Konstruktion. Neben einem Gabelkopf und Ösenkopf sind aber auch andere Verbindungskomponenten denkbar, die sich auf die verschiedenen Zugelemente aufbringen lassen, um das betreffende Zugglied mit einem anderen Objekt verbinden zu können, und die mit einem Innengewinde zum Zusammenwirken mit dem Außengewinde des Zugelements versehen sind.

In einer bevorzugten Ausführungsform weist die Verbindungskomponente zumindest eine Lasche mit einer Länge in einer Zugrichtung der Verbindungskomponente, einer Breite quer zur Zugrichtung und einer Dicke senkrecht zur Länge und zur Breite auf, durch die ein Auge entlang der Richtung der Dicke durch die Lasche hindurch ausgebildet ist. Ein Betrag der Dicke der Lasche ist dabei in einer Mitte, bezogen auf die Richtung der Breite, maximal und nimmt zu zumindest einem in Richtung der Breite außen liegenden Seitenbereich hin ab. Weiter bevorzugt nimmt der Betrag der Dicke zu zwei in Richtung der Breite außen und einander gegenüberliegenden Seitenbereichen hin ab.

Durch diese Ausgestaltung der Verbindungskomponente kann diese besonders gut hergestellt werden. Insbesondere ist etwaiges Entformen bei einem Umformvorgang zur Herstellung der Verbindungskomponente so leichter möglich. Ferner ergeben sich beim Gießen der Verbindungskomponente für die Kerne und auch das Teil selbst Vorteile, die insbesondere in einer einfacheren Herstellung und besseren fluiddynamischen Eigenschaften der entsprechenden Formen und Kerne liegen.

Der Betrag der Dicke nimmt vorzugsweise so von der Mitte her zu den Seitenbereichen zu oder von den Seitenbereichen her ab, dass eine schräge Ebene entsteht oder zwei schräge Ebenen entstehen, die sich von dem jeweiligen Seitenbereich zur Mitte hin erstreckt oder erstrecken. Weiter bevorzugt nimmt der Betrag der Dicke derart von der Mitte zu den beiden Seitenbereichen hin ab, dass in der Mitte ein Hochgrat ausgebildet ist.

Hierdurch werden die oben genannten Vorteile dieser bevorzugten Ausführungsform in besonderem Maße erzielt.

Bevorzugt kann der Betrag der Dicke unabhängig von seinen bevorzugten Unterschieden zwischen der Mitte und den Seitenbereichen auch in Richtung der Zugrichtung, also der Richtung seiner Länge, variieren.

Bevorzugt ist dabei das Auge in der Mitte bezogen auf die Richtung der Breite in der Lasche ausgebildet.

So wird insbesondere der Bereich des Auges stärker belastbar, weil etwas mehr Material im Bereich des Anliegens eines Bolzens oder ähnlichen, mit dem Auge zusammenwirkenden Element als in anderen Bereichen der Lasche vorhanden ist. So kann ein guter Kompromiss zwischen geringem Gewicht einerseits und hoher Festigkeit andererseits erzielt werden. Auch der Augstab hinter dem Bolzen findet somit etwas mehr Material vor, was Nachweise zur Festigkeit des Gesamtsystems erleichtert. Ferner ergibt sich bei dieser bevorzugten Ausführungsform ein höherer Biegewiderstand der Lasche, der insbesondere bei einer üblicherweise ungewollten aber nicht ausschließbaren Querbelastung von Bedeutung ist.

Alternativ kann der Betrag der Dicke der Lasche in Richtung der Breite im Wesentlichen konstant sein.

In einer bevorzugten Ausführungsform weist die Verbindungskomponente zwei gleich ausgebildete Laschen auf, deren Augen zur Aufnahme eines Bolzens zueinander fluchtend ausgebildet sind. Somit kann ein besonders vorteilhafter Gabelkopf ausgebildet werden.

In einer weiteren bevorzugten Ausführungsform weisen zumindest eines, bevorzugt beide, der zumindest zwei verschiedenen, austauschbaren Zugelemente jeweils in beiden Endbereichen ein Außengewinde auf. Das Innengewinde der zumindest einen Verbindungskomponente ist dann dazu ausgebildet, mit dem jeweiligen Außengewinde beider Endbereiche zusammenzuwirken. Alternativ hierzu sind auch Ausführungsformen möglich, in denen zumindest eines der zumindest zwei verschiedenen, austauschbaren Zugelemente nur an einem seiner beiden Endbereiche ein passendes Außengewinde aufweist.

In einer bevorzugten Ausführungsform ist eines der zumindest zwei verschiedenen, austauschbaren Zugelemente ein Zugstab, dessen Außengewinde spanend oder durch Umformen, d.h. Kaltverformen, ausgebildet ist. Ein durch Umformen, d.h. Kaltverformen, ausgebildetes Außengewinde ist vorteilhaft, weil es eine höhere Festigkeit aufweist als ein spanend hergestelltes Gewinde. Eine spanende Bearbeitung zur Ausbildung des Gewindes ist jedoch auch möglich.

In einer weiteren bevorzugten Ausführungsform ist eines der zumindest zwei verschiedenen, austauschbaren Zugelemente ein Seilzugglied, dessen Außengewinde an einem Gewindefitting ausgebildet ist. Alternativ zu einem Gewindefitting sind auch Vergussverfahren oder andere Formen denkbar, um das Seilzugglied mit einem Außengewinde zu versehen.

Vorzugsweise kann das Außengewinde weniger Last aufnehmen als die rechnerische Bruchkraft des jeweiligen Zugelements oder kann das Außengewinde gleich viel Last aufnehmen wie die rechnerische Bruchkraft des jeweiligen Zugelements. Diese Auslegung des Zugelements und seines Außengewindes stellt sicher, dass bei derselben Gewindegröße der verschiedenen Zugelemente ein flexibler Wechsel zwischen den verschiedenen Zugelementen möglich ist, ohne eine neue Berechnung oder anderweitige Anpassung des Gesamtsystems erforderlich zu machen. Denn durch diese bevorzugte Ausgestaltung ist immer sichergestellt, dass nicht der Zugstab oder das Seil oder die Verpressung eines Gewindefittings vor dem Außengewinde versagen, so dass die Wahl des Zugelements, insbesondere eines Zugstabs oder eines Seilzugglieds, frei getroffen werden kann, weil die Bruchkraft des jeweiligen Zugelements in jedem Fall ausreichend ist.

Bevorzugt sind die Verbindungskomponente und/oder das Zugelement aus Edelstahl oder verzinktem oder beschichtetem Stahl ausgebildet. Edelstahl und verzinkter oder beschichteter Stahl haben sich im Bereich der Zugglieder und Verbindungskomponenten als besonders vorteilhaft insbesondere bei ihrer Verwendung in einem Bauwerk herausgestellt, weil sie verhältnismäßig hohe Lasten aufnehmen können, leicht bearbeitbar und korrosionsbeständig sind. Es können jedoch auch andere Materialen für die Verbindungskomponenten, das Zugelement oder beides verwendet werden.

In einer bevorzugten Ausführungsform ist die Verbindungskomponente wahlweise mit jedem der zumindest zwei verschiedenen, austauschbaren Zugelemente kombinierbar. Es ist also in dieser bevorzugten Ausführungsform möglich, dieselbe Verbindungskomponenten ohne einen zusätzlichen Adapter oder ein ähnliches Element mit jedem der zur Verfügung stehenden Zugelemente des Systems zu kombinieren, insbesondere auch wenn das System für eine konkrete Konstruktion mehr als zwei verschiedene Zugelemente aufweist.

Ein erfindungsgemäßes Zugelement für das oben beschriebene System umfasst zumindest einen Endbereich, in dem es ein Außengewinde aufweist und dazu ausgebildet ist, mit einem Innengewinde einer Verbindungskomponente des Systems zusammenzuwirken.

Weitere Merkmale und Vorteile der Erfindung ergeben sich aus der Gesamtheit der Ansprüche und der nachfolgenden Figurenbeschreibung.

### KURZE FIGURENBESCHREIBUNG

Figur 1 zeigt einen Zugstab mit gerolltem Gewinde.
Figur 2 zeigt ein Seilzugglied mit Gewindefitting.
Figuren 3a und 3b zeigen einen Gabelkopf mit Innengewinde.
Figuren 3c und 3d zeigen einen Ösenkopf mit Innengewinde.
Figur 4 zeigt ein zweiteiliges Gabelfitting.
Figur 5 zeigt eine Muffe mit Innengewinden.
Figuren 6a und 6b zeigen eine weitere Ausführungsform eines Gabelkopfs mit Innengewinde.
Figuren 6c und 6d zeigen eine weitere Ausführungsform eines Ösenkopfs mit Innengewinde.

### WEGE ZUR AUSFÜHRUNG DER ERFINDUNG

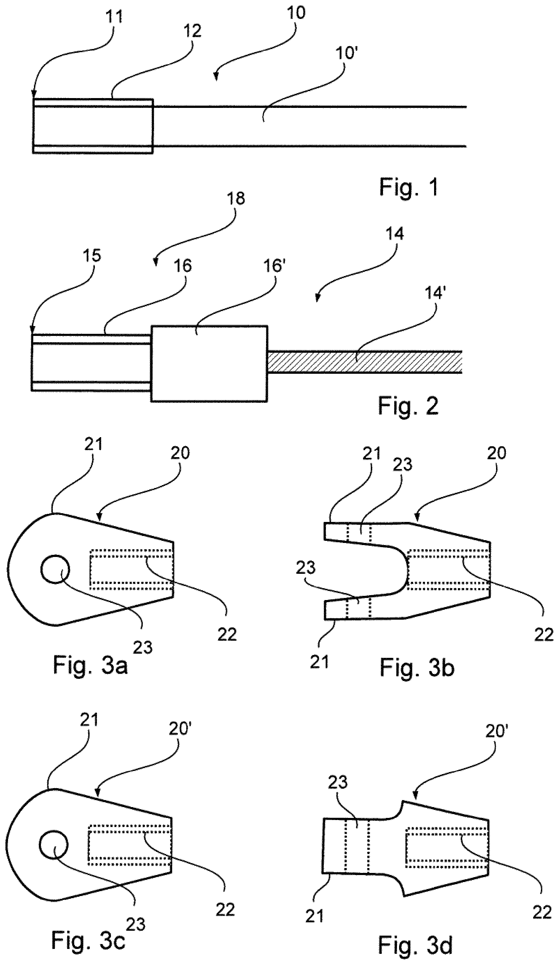

Figur 1 zeigt einen Zugstab 10 aus einem Vollquerschnitt 10' mit gerolltem Gewinde. Der Zugstab 10 ist ein erstes Beispiel für ein Zugelement eines Systems aus statisch belastbaren Komponenten in einem Bauwerk und weist einen Endbereich 11 auf, in dem ein Außengewinde 12 ausgebildet ist. Das Außengewinde 12 ist in der in Figur 1 gezeigten Ausführungsform als gerolltes Gewinde ausgebildet und erstreckt sich über den Endbereich 11 definierter Länge auf der einen Seite des Zugstabs 10. Die zweite Seite des Zugstabs 10 ist in Figur 1 nicht gezeigt und kann ebenfalls in ihrem Endabschnitt mit einem Außengewinde versehen sein.

Es ist jedoch auch möglich, dass der Zugstab 10 auf seiner nicht gezeigten Seite ohne ein solches Außengewinde 12 ausgebildet ist.

Figur 2 zeigt ein Seilzugglied 14 mit Gewindefitting 18 und damit ein zweites Beispiel eines Zuggliedes eines Systems aus statisch belastbaren Komponenten in einem Bauwerk. Das Seilzugglied 14 weist einen Endbereich 15 auf, an dem das Gewindefitting 18 angeordnet ist. Das Gewindefitting 18 ist mittels einer Verpresshülse 16' auf ein Seil 14' aufgepresst und umfasst neben der Verpresshülse 16' einen Außengewindebereich mit einem Außengewinde 16. Das Außengewinde 16 des Seilzugglieds 14 aus Figur 2 entspricht dem Außengewinde 12 des Zugstabs 10 aus Figur 1.

Figuren 3a und 3b zeigen einen Gabelkopf 20 als ein Beispiel einer Verbindungskomponente eines Systems aus statisch belastbaren Komponenten in einem Bauwerk, wobei der Gabelkopf 20 ein Innengewinde 22 und ein Auge 23 aufweist. Das Innengwinde 22 des Gabelkopfs 20 ist so ausgebildet, dass es mit den Außengewinden 12, 16 des Zugstabs 10 und des Seilzugglieds 14 zusammenwirken kann. Figur 3a zeigt dabei eine Seitenansicht des Gabelkopfs 20, während Figur 3b eine Draufsicht des Gabelkopfs 20 zeigt.

Figuren 3c und 3d zeigen einen Ösenkopf 20' als ein weiteres Beispiel einer Verbindungskomponente eines Systems aus statisch belastbaren Komponenten in einem Bauwerk, wobei der Ösenkopf 20' ein Innengewinde 22 und ein Auge 23 aufweist, die wie beim Gabelkopf 20 aus Figuren 3a und 3b ausgebildet sein können. Figur 3c zeigt dabei eine Seitenansicht des Ösenkopfs 20', während Figur 3d eine Draufsicht des Ösenkopfs 20' zeigt. Im Gegensatz zum Gabelkopf 20 weist der Ösenkopf 20' nur eine Lasche 21, nicht zwei Laschen 21 auf, wie aus dem Vergleich der beiden Draufsichten 3b und 3d ersichtlich ist.

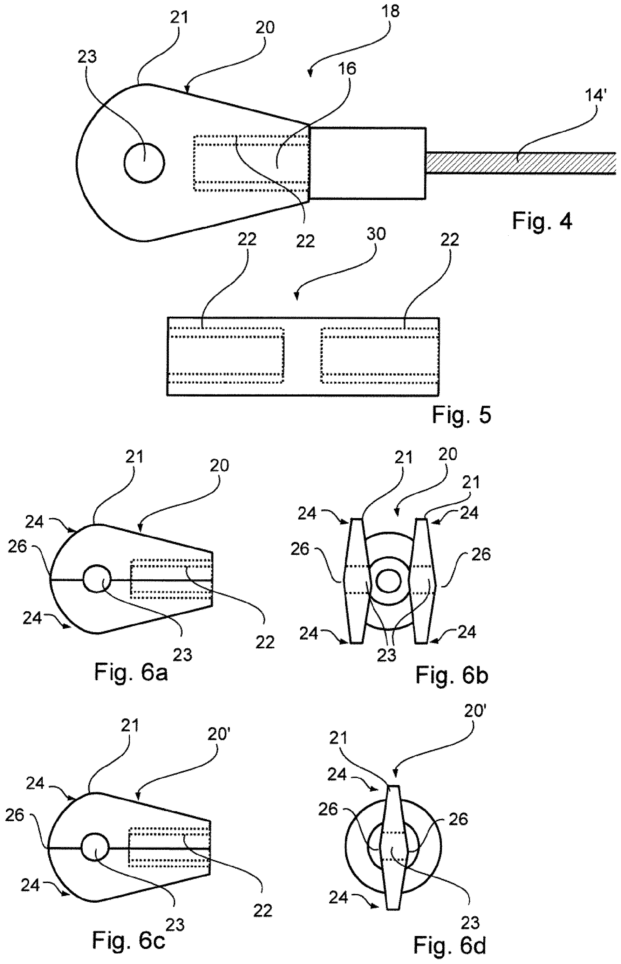

Figur 4 zeigt nun ein Beispiel eines zweiteiligen Gabelfittings, bei dem der Gabelkopf 20 mit Innengewinde 22 aus Figur 3a und 3b auf das Seilzugglied 14 mit Gewindefitting 18 aus Figur 2 aufgeschraubt wurde. Das Innengewinde 22 wirkt dabei mit dem Außengewinde 16 zusammen. Der Gabelkopf 20 könnte genauso mit dem Zugstab 10 aus Figur 1 verbunden werden, um ein zweiteiliges Gabelfitting aus Gabelkopf 20 mit Innengewinde 22 und Zugstab 10 mit Außengewinde 12 zu bilden. Selbstverständlich kann analog hierzu auch mit einem Ösenkopf und Seilzugglied bzw. Zugstab verfahren werden, um ein zweiteiliges Ösenfitting auszubilden.

Der Gabelkopf 20 kann bei der dargestellten Ausführungsform wahlweise mit dem Seilzugglied 14 oder dem Zugstab 10 verbunden werden, so dass auch in letzter Sekunde vor dem Einbau oder auch nach dem Einbau ein Austausch des Seilzugglieds 14 durch einen entsprechenden Zugstab 10 oder andersherum möglich ist, ohne eine erneute statische Berechnung durchzuführen oder andere Komponenten des Gesamtaufbaus anpassen zu müssen.

Während in Figuren 3a-3d und 4 Anschlussköpfe als Beispiele einer Verbindungskomponenten gezeigt sind, zeigt Figur 5 eine Muffe 30 als ein weiteres Beispiel einer Verbindungskomponente.

Figuren 6a und 6b zeigen eine weitere Ausführungsform eines Gabelkopfs 20 mit Innengewinde 22. Während Figur 6a eine Seitenansicht des Gabelkopfs 20 zeigt, zeigt Figur 6b eine Vorderansicht des Gabelkopfs 20. Der Gabelkopf 20 entspricht im Wesentlichen dem in Figuren 3a und 3b gezeigten Gabelkopf 20. Der in Figuren 6a und 6b gezeigte Gabelkopf 20 weist wie der Gabelkopf 20 aus Figuren 3a und 3b zwei Laschen 21 mit einer Länge in einer Zugrichtung, einer Breite quer zur Zugrichtung und einer Dicke senkrecht zur Länge und zur Breite auf, durch die jeweils ein Auge 23 entlang der Richtung der Dicke durch die Laschen 21 hindurch ausgebildet ist.

Im Gegensatz zu der Ausführungsform aus Figuren 3a und 3b ist in der Ausführungsform aus Figuren 6a und 6b ein Betrag der Dicke der Lasche 21 in einer Mitte, bezogen auf die Richtung der Breite, maximal und nimmt zu zwei in Richtung der Breite außen und einander gegenüberliegenden Seitenbereichen 24 hin ab. In der Mitte entsteht so ein Hochgrat 26.

Figuren 6c und 6d zeigen eine weitere Ausführungsform eines Ösenkopfs 20' mit Innengewinde 22. Während Figur 6c eine Seitenansicht des Ösenkopfs 20' zeigt, zeigt Figur 6d eine Vorderansicht des Ösenkopfs 20'. Der Unterschied zwischen der Ausführungsform gemäß Figur 6c und 6d gegenüber der Figur 3c und 3d liegt wiederum darin, dass ein Betrag der Dicke der Lasche 21 in einer Mitte, bezogen auf die Richtung der Breite, maximal ist und zu zwei in Richtung der Breite außen und einander gegenüberliegenden Seitenbereichen 24 hin abnimmt. In der Mitte entsteht so ein Hochgrat 26.

Somit wird durch das erfindungsgemäße System, insbesondere gemäß den bevorzugten Ausführungsformen aus den Figuren 1 bis 6d, die Möglichkeit geschaffen, bei gleichbleibender Auslastungen des gesamten Systems willkürlich verschiedene Kombinationen aus unterschiedlichen Zugelementen und Verbindungskomponenten einzusetzen.

## Patentansprüche

1. System aus statisch belastbaren Komponenten für Bauwerke umfassend
zumindest zwei verschiedene Zugelemente (10, 14) mit jeweils zumindest einem Endbereich (11, 15), die in ihrem Endbereich (11, 15) ein Außengewinde (12, 16) aufweisen, und
zumindest eine Verbindungskomponente (20, 20', 30) mit einem Innengewinde (22), das dazu ausgebildet ist, mit dem Außengewinde (12, 16) eines der Zugelemente (10, 14) als Zugglied zusammenzuwirken,
**dadurch gekennzeichnet, dass**
die Außengewinde (12, 16) der zumindest zwei verschiedenen Zugelemente (10, 14) dieselbe Gewindetragfähigkeit aufweisen und eine jeweilige Grenzzugkraft der zumindest zwei verschiedenen Zugelemente (10, 14) bestimmen, wobei das Außengewinde (12, 16) weniger Last aufnehmen kann als oder gleich viel Last aufnehmen kann wie die rechnerische Bruchkraft des jeweiligen Zugelements (10, 14).

2. System nach Anspruch 1, wobei die Zugelemente (10, 14) einerseits mindestens einen Zugstab (10) und andererseits mindestens ein Seilzugglied (14) aufweisen.

3. System nach Anspruch 1 oder 2, wobei die Verbindungskomponente (20, 20') ein Gabelkopf oder ein Ösenkopf oder eine Muffe (30) ist,
wobei die Verbindungskomponente bevorzugt zum miteinander Verbinden von unterschiedlichen Zugelementen (10, 14) oder zur Endverankerung am Bauwerk ausgebildet ist.

4. System nach einem der vorhergehenden Ansprüche, wobei die Verbindungskomponente (20) zumindest eine Lasche (21) mit einer Länge in einer Zugrichtung der Verbindungskomponente (20, 20'), einer Breite quer zur Zugrichtung und einer Dicke senkrecht zur Länge und zur Breite aufweist, durch die ein Auge (23) entlang der Richtung der Dicke durch die Lasche (21) hindurch ausgebildet ist,
wobei ein Betrag der Dicke der Lasche (21) in einer Mitte, bezogen auf die Richtung der Breite, maximal ist und zu zumindest einem in Richtung der Breite außen liegenden Seitenbereich (24) hin,
bevorzugt zu zwei in Richtung der Breite außen und einander gegenüberliegenden Seitenbereichen (24) hin, abnimmt,
wobei das Auge (23) bevorzugt in der Mitte bezogen auf die Richtung der Breite in der Lasche (21) ausgebildet ist,
wobei der Betrag der Dicke bevorzugt derart von der Mitte zu den beiden Seitenbereichen (24) hin abnimmt, dass in der Mitte ein Hochgrat (26) ausgebildet ist.

5. System nach einem der Ansprüche 1 bis 3, wobei die Verbindungskomponente (20) zumindest eine Lasche (21) mit einer Länge in einer Zugrichtung der Verbindungskomponente (20, 20'), einer Breite quer zur Zugrichtung und einer Dicke senkrecht zur Länge und zur Breite aufweist, durch die ein Auge (23) entlang der Richtung der Dicke durch die Lasche (21) hindurch ausgebildet ist,
wobei ein Betrag der Dicke der Lasche (21) in Richtung der Breite im Wesentlichen konstant ist.

6. System nach Anspruch 4 oder 5, wobei die Verbindungskomponente (20) zwei gleich ausgebildete Laschen (21) aufweist, deren Augen (23) zur Aufnahme eines Bolzens zueinander fluchtend ausgebildet sind, um somit einen Gabelkopf zu bilden.

7. System nach einem der vorhergehenden Ansprüche, wobei zumindest eines, bevorzugt beide, der zumindest zwei verschiedenen Zugelemente (10, 14) jeweils in beiden Endbereichen (11, 15) ein Außengewinde (12, 16) aufweisen und wobei das Innengewinde (22) der zumindest einen Verbindungskomponente (20) dazu ausgebildet ist, mit dem Außengewinde (12, 16) der jeweils beiden Endbereiche (11, 15) zusammenzuwirken.

8. System nach einem der vorhergehenden Ansprüche, wobei eines der zumindest zwei verschiedenen Zugelemente (10, 14) ein Zugstab (10) ist und wobei dessen Außengewinde (12) spanend oder durch Umformen ausgebildet ist.

9. System nach einem der vorhergehenden Ansprüche, wobei eines der zumindest zwei verschiedenen Zugelemente (10, 14) ein Seilzugglied (14) ist und wobei dessen Außengewinde (16) an einem Gewindefitting (18) ausgebildet ist.

10. System nach einem der vorhergehenden Ansprüche, wobei die Verbindungskomponente (20, 20', 30) und/oder das Zugelement (10, 14) aus Edelstahl oder verzinktem oder beschichtetem Stahl ausgebildet ist oder sind.

11. System nach einem der vorhergehenden Ansprüche, wobei die Verbindungskomponente (20, 20', 30) wahlweise mit jedem der zumindest zwei verschiedenen Zugelemente (10, 14) kombinierbar ist.

12. System nach einem der vorhergehenden Ansprüche, wobei ein Zugelement mit einem Seil oder einem Zugstab die gleichen Grenzzugkräfte übertragen kann.

## Claims

1. System of statically loadable components for building structures comprising
at least two different tension elements (10, 14), each with at least one end region (11, 15), having an outer thread (12, 16) in their end region (11, 15), and
at least one connecting component (20, 20', 30) with an inner thread (22) which is designed to interact with the outer thread (12, 16) of one of the tension elements (10, 14) as a tension member,
**characterised in that**
the outer threads (12, 16) of the at least two different tension elements (10, 14) have the same thread load rating and determine a respective limit tension load of the at least two different tension elements (10, 14), wherein the outer thread (12, 16) can absorb less load than, or can absorb the same load as, the calculated breaking strength of the respective tension element (10, 14) .

2. System according to claim 1, wherein the tension elements (10, 14) have at least one tension rod (10) on the one hand and at least one cable tension member (14) on the other.

3. System according to claim 1 or 2, wherein the connecting component (20, 20') is a clevis or an eye head or a bushing (30),
wherein the connecting component is preferably designed for connecting different tension elements (10, 14) or for anchoring the end to the building structure.

4. System according to one of the preceding claims, wherein the connecting component (20) has at least one lug (21) with a length in a direction of tension of the connecting component (20, 20'), a width transverse to the direction of tension and a thickness perpendicular to the length and width through which an eye (23) is formed through the lug (21) along the direction of the thickness,
wherein an amount of the thickness of the lug (21) is at its maximum in a centre, relative to the direction of the width, and decreases towards at least one outer side region in the direction of the width (24),
preferably towards two opposing outer side regions (24) in the direction of the width,
wherein the eye (23) is preferably formed in the centre of the lug (21) relative to the direction of the width,
wherein the amount of the thickness preferably decreases from the centre towards the two side regions (24) in such a way that an elevated ridge (26) is formed in the centre.

5. System according to one of the claims 1 to 3, wherein the connecting component (20) has at least one lug (21) with a length in a direction of tension of the connecting component (20, 20'), a width transverse to the direction of tension and a thickness perpendicular to the length and width through which an eye (23) is formed through the lug (21) along the direction of the thickness,
wherein an amount of the thickness of the lug (21) is substantially constant in the direction of the width.

6. System according to claim 4 or 5, wherein the connecting component (20) has two identically designed lugs (21), the eyes (23) of which are aligned with each other to receive a bolt, thus forming a clevis.

7. System according to one of the preceding claims, wherein at least one, preferably both, of the at least two different tension elements (10, 14) in each case have an outer thread (12, 16) in both end regions (11, 15) and wherein the inner thread (22) of the at least one connecting component (20) is designed to interact with the outer thread (12, 16) of the two respective end regions (11, 15).

8. System according to one of the preceding claims, wherein one of the at least two different tension elements (10, 14) is a tension rod (10) and wherein its outer thread (12) is formed by machining or forming.

9. System according to one of the preceding claims, wherein one of the at least two different tension elements (10, 14) is a cable tension member (14) and wherein its outer thread (16) is formed on a threaded fitting (18).

10. System according to one of the preceding claims, wherein the connecting component (20, 20', 30) and/or the tension element (10, 14) is or are made of stainless steel or galvanised or coated steel.

11. System according to one of the preceding claims, wherein the connecting component (20, 20', 30) can optionally be combined with any of the at least two different tension elements (10, 14).

12. System according to one of the preceding claims, wherein a tension element can transmit the same limit tension loads with a cable or a tension rod.

## Revendications

1. Système de composants sollicitables statiquement pour des bâtiments comprenant
au moins deux éléments de traction différents (10, 14) avec respectivement au moins une zone d'extrémité (11, 15) qui présentent dans leur zone d'extrémité (11, 15) un filetage extérieur (12, 16), et
au moins un composant de liaison (20, 20', 30) avec un filetage intérieur (22) qui est réalisé afin de coopérer avec le filetage extérieur (12, 16) d'un des éléments de traction (10, 14) comme organe de traction,
**caractérisé en ce que**
les filetages extérieurs (12, 16) des au moins deux éléments de traction différents (10, 14) présentent la même capacité porteuse de filetage et déterminent une force de traction limite respective des au moins deux éléments de traction différents (10, 14), dans lequel le filetage extérieur (12, 16) peut recevoir moins de charge que ou autant de charge que la force de rupture arithmétique de l'élément de traction (10, 14) respectif.

2. Système selon la revendication 1, dans lequel les éléments de traction (10, 14) présentent d'une part au moins une barre de traction (10) et d'autre part au moins un organe de câble de traction (14).

3. Système selon la revendication 1 ou 2, dans lequel le composant de liaison (20, 20') est une tête de fourche ou une tête d'œillet ou un manchon (30),
dans lequel le composant de liaison est de préférence réalisé pour la liaison entre eux d'éléments de traction différents (10, 14) ou pour l'ancrage final au niveau du bâtiment.

4. Système selon l'une quelconque des revendications précédentes, dans lequel le composant de liaison (20) présente au moins une languette (21) avec une longueur dans un sens de traction du composant de liaison (20, 20'), une largeur transversale au sens de traction et une épaisseur perpendiculaire à la longueur et à la largeur, par laquelle un œil (23) est réalisé le long de la direction de l'épaisseur à travers la languette (21),
dans lequel une somme de l'épaisseur de la languette (21) est maximale dans un milieu, par rapport à la direction de la largeur, et diminue vers au moins une zone latérale (24) se trouvant à l'extérieur en direction de la largeur,
de préférence vers deux zones latérales (24) opposées en direction de la largeur à l'extérieur et l'une à l'autre,
dans lequel l'œil (23) est de préférence réalisé au milieu par rapport à la direction de la largeur dans la languette (21),
dans lequel la somme de l'épaisseur diminue de préférence du milieu vers les deux zones latérales (24) de telle manière qu'une arête élevée (26) soit réalisée au milieu.

5. Système selon l'une quelconque des revendications 1 à 3, dans lequel le composant de liaison (20) présente au moins une languette (21) avec une longueur dans un sens de traction du composant de liaison (20, 20'), une largeur transversale au sens de traction et une épaisseur perpendiculaire à la longueur et à la largeur, par laquelle un œil (23) est réalisé le long de la direction de l'épaisseur à travers la languette (21),
dans lequel une somme de l'épaisseur de la languette (21) est sensiblement constante en direction de la largeur.

6. Système selon la revendication 4 ou 5, dans lequel le composant de liaison (20) présente deux languettes (21) réalisées de manière identique, dont les yeux (23) sont réalisés en alignement l'un sur l'autre pour la réception d'un boulon afin de former ainsi une tête de fourche.

7. Système selon l'une quelconque des revendications précédentes, dans lequel au moins un, de préférence les deux, des au moins deux éléments de traction différents (10, 14) présentent respectivement dans les deux zones finales (11, 15) un filetage extérieur (12, 16) et dans lequel le filetage intérieur (22) des au moins un composant de liaison (20) est réalisé afin de coopérer avec le filetage extérieur (12, 16) des respectivement deux zones finales (11, 15).

8. Système selon l'une quelconque des revendications précédentes, dans lequel un des au moins deux éléments de traction différents (10, 14) est une barre de traction (10) et dans lequel son filetage extérieur (12) est réalisé par enlèvement de copeaux ou par déformation.

9. Système selon l'une quelconque des revendications précédentes, dans lequel un des au moins deux éléments de traction différents (10, 14) est un organe de câble de traction (14) et dans lequel son filetage extérieur (16) est réalisé au niveau d'un raccord de filetage (18).

10. Système selon l'une quelconque des revendications précédentes, dans lequel le composant de liaison (20, 20', 30) et/ou l'élément de traction (10, 14) est ou sont réalisés en acier spécial ou acier galvanisé ou revêtu.

11. Système selon l'une quelconque des revendications précédentes, dans lequel le composant de liaison (20, 20', 30) peut être combiné au choix avec chacun des au moins deux éléments de traction différents (10, 14).

12. Système selon l'une quelconque des revendications précédentes, dans lequel un élément de traction avec un câble ou une barre de traction peut transmettre les mêmes forces de traction limites.
